# DEMANDE DE BREVET EUROPEEN

(11) **EP 4 438 934 A1**
(43) Date de publication de la demande: **02.10.2024**
(21) Numéro de dépôt: 24166596.7
(22) Date de dépôt: 27.03.2024
(51) Int. Cl.: F16L 21/08, E04B 1/00, F16L 59/14, F24F 13/02

(54) **COLLIER D'ASSEMBLAGE, POUR LE POSITIONNEMENT ET LE MAINTIEN DES EXTRÉMITÉS DE DEUX ÉLÉMENTS DE CONDUIT QUI SONT MISES BOUT À BOUT**

(30) Priorité: 29.03.2023 FR 2303039
(71) Demandeur: VITALOME, 79360 Granzay-Gript (FR)
(72) Inventeur: BALOGE, Jean-Charles, 79370 AIGONNAY (FR); BEDUCHAUD, Maxence, 17000 LA ROCHELLE (FR); PEIGNÉ, Pierre, 17139 DOMPIERRE-SUR-MER (FR); BROUSSIN, Jérôme, 79270 FRONTENAY ROHAN ROHAN (FR)
(74) Mandataire: Jacobacci Coralis Harle

(57) **Abrégé**

La présente invention concerne un collier d'assemblage, pour le positionnement et le maintien des extrémités de deux éléments de conduit qui sont mises bout à bout.

Le collier d'assemblage (3) comprend au moins une partie berceau (5), s'étendant sur un secteur angulaire supérieur ou égal à 180°. Cette partie berceau (5) est apte à subir, en configuration ouverte, une déformation élastique radiale pour autoriser un emboitement élastique desdits deux éléments de conduit (2) lors dudit positionnement et/ou dudit retrait, assurant un positionnement avec maintien temporaire desdits deux éléments de conduit (2).

Et ladite face intérieure (31) du collier d'assemblage (3) comporte des premiers moyens d'assemblage annulaire (311) qui sont adaptés à coopérer par un emboîtement annulaire avec des seconds moyens d'assemblage annulaire, complémentaires, qui sont ménagés au niveau des extrémités desdits éléments de conduit.

## Description

### Domaine technique de l'invention

La présente invention concerne le domaine technique des colliers d'assemblage, pour le positionnement et le maintien des extrémités de deux éléments de conduit qui sont mises bout à bout, par exemple des éléments de conduit pour le transport des gaz, avantageusement d'air ou des fumées.

### Etat de la technique

Dans les environnements habités, la maîtrise de la qualité de l'air intérieur (QAI) connaît un essor particulier et s'impose progressivement comme un des objectifs clés à atteindre dans tout projet de construction ou de rénovation.

A ce titre, on observe le développement important de l'offre des équipements associés à cette gestion de la qualité de l'air intérieur.

Toutefois, l'offre produit pour le réseau de transport d'air repose essentiellement sur des solutions traditionnelles, de type conduites souples isolées ou encore conduites rigides à simple paroi avec isolation rapportée, dont les performances réelles (pertes de charge, isolation thermique, étanchéité, résistance à l'écrasement) dépendent fortement des conditions de mise en oeuvre.

En particulier, certains défauts sont couramment rapportés :
- présence importante de singularités et dévoiements (pertes de charge importantes) ;
- défaut de continuité de l'isolation rapportée ;
- défaut d'étanchéité aux emboîtements ou aux liaisons avec d'autres composants réseau ;
- défaut d'accès pour l'entretien du réseau.

Avec l'offre produit actuelle, la résolution de ces défauts repose pour beaucoup sur le savoir-faire des artisans poseurs. Pour ce faire, les installateurs ont couramment recours à des rivets, visseries, outils de découpe, mastic et bandes autocollantes de raccords.

C'est dans ce contexte que les réglementations liées à la construction et à la rénovation des bâtiments tendent vers la mise en place d'obligation de vérification des systèmes de ventilation, dans le but d'avoir une garantie des performances de l'installation.

Il existe ainsi un besoin de nouvelles solutions techniques pouvant participer à la maîtrise de la qualité de l'air intérieur et des installations associées.

### Présentation de l'invention

Afin de répondre à ces problématiques de l'état de la technique, la présente invention propose un collier d'assemblage, pour le positionnement et le maintien des extrémités de deux éléments de conduit qui sont mises bout à bout, par exemple des éléments de conduit pour le transport des gaz, avantageusement d'air ou des fumées.

Le collier d'assemblage comporte une face intérieure adaptée à coopérer avec les extrémités mises bout à bout desdits deux éléments de conduit.

Ce collier d'assemblage comporte des moyens de fermeture, autorisant la manoeuvre dudit collier d'assemblage entre deux configurations :
- une configuration ouverte, pour le positionnement et le retrait des extrémités desdits deux éléments de conduit, et
- une configuration fermée, pour le maintien des extrémités mises bout à bout desdits deux éléments de conduit.

Et ce ledit collier d'assemblage comprend au moins une partie berceau, s'étendant sur un secteur angulaire supérieur ou égal à 180°. Cette partie berceau est apte à subir, en configuration ouverte, une déformation élastique radiale pour autoriser un emboitement élastique desdits deux éléments de conduit lors dudit positionnement et/ou dudit retrait, assurant un positionnement avec maintien temporaire desdits deux éléments de conduit.

Et ladite face intérieure du collier d'assemblage comporte des premiers moyens d'assemblage annulaire qui sont adaptés à coopérer par un emboîtement annulaire avec des seconds moyens d'assemblage annulaire, complémentaires, qui sont ménagés au niveau des extrémités desdits éléments de conduit.

La présente invention, un collier d'assemblage avec une partie berceau, permet le montage/démontage d'éléments de conduit, avec un maintien temporaire des éléments de conduit à associer, avant et après l'opération de fermeture du collier d'assemblage.

En particulier, cet assemblage selon l'invention est obtenu par la coopération entre, d'une part, l'emboitement élastique entre la partie berceau et les deux éléments de conduit et, d'autre part, l'emboitement annulaire des moyens d'assemblage complémentaires.

En outre, l'invention présente des caractéristiques originales qui permettent aux artisans poseurs d'éviter les défauts observés précédemment lors de l'association de deux éléments de conduit. Elle est également extrêmement simple d'usage et durable. Elle permet de garantir la fiabilité de l'ensemble du réseau de conduit, sans erreur possible.

De préférence, les premiers moyens d'assemblage annulaire comprennent au moins une première structure annulaire qui est choisie parmi une nervure et une rainure, avantageusement continue ou discontinue, adaptée à coopérer par emboîtement annulaire avec au moins une seconde structure annulaire, complémentaire, constitutive desdits seconds moyens d'assemblage annulaire.

Selon une forme de réalisation, ladite au moins une première structure annulaire consiste en une nervure qui s'étend en saillie par rapport à ladite face intérieure, pour coopérer par emboîtement annulaire avec ladite au moins une seconde structure annulaire, complémentaire et concave.

La face intérieure comporte alors avantageusement deux bordures latérales ; les premiers moyens d'assemblage annulaire comprennent deux nervures en forme de collerette qui sont raccordées à chacune desdites bordures latérales et qui sont orientées du côté de ladite face intérieure.

Selon une forme de réalisation alternative, ladite au moins une première structure annulaire consiste en une rainure qui est concave par rapport à ladite face intérieure, pour coopérer par emboîtement annulaire avec une seconde structure annulaire, complémentaire et convexe, constitutive desdits seconds moyens d'assemblage annulaire.

Encore selon l'invention, lesdits moyens de fermeture comprennent avantageusement au moins une partie coiffe, mobile par rapport à ladite partie berceau entre :
- la configuration ouverte, dans laquelle ladite partie berceau définit une ouverture radiale autorisant un emboitement élastique desdits deux éléments de conduit lors dudit positionnement et/ou dudit retrait,
- la configuration fermée, dans laquelle ladite au moins une partie coiffe obture ladite ouverture radiale de la partie berceau.

De préférence, lesdites au moins deux parties coopèrent par l'intermédiaire de moyens charnières, par exemple une charnière intégrée ou une charnière rapportée.

Encore de préférence, ladite partie coiffe comporte deux extrémités :
- une première extrémité coopérant avec une première extrémité de ladite partie berceau, par l'intermédiaire desdits moyens charnières, et
- une seconde extrémité coopérant, en configuration fermée, avec une seconde extrémité de ladite partie berceau par l'intermédiaire de moyens de verrouillage.

De préférence encore, le collier d'assemblage comprend une unique partie berceau et une unique partie coiffe, coopérant par l'intermédiaire desdits moyens charnières.

D'autres caractéristiques non limitatives et avantageuses du produit/procédé conforme à l'invention, prises individuellement ou selon toutes les combinaisons techniquement possibles, sont les suivantes :
- la partie berceau s'étend sur un secteur angulaire allant de 180° à 270° ;
- ledit collier d'assemblage comporte des moyens de montage, par exemple un orifice oblong sur une zone emboutie, adaptés à recevoir un organe support destiné à être installé entre ledit collier d'assemblage et un bâti (par exemple sur les fermettes).

La présente invention concerne encore un réseau de conduits, comprenant :
- plusieurs éléments de conduit dont les extrémités sont mises bout à bout, lesquelles extrémités comportent lesdits seconds moyens d'assemblage annulaire, et
- des colliers d'assemblage, selon l'invention, pour le positionnement et le maintien des extrémités de deux éléments de conduit.

Les extrémités desdits éléments de conduit et ladite au moins une partie berceau des colliers d'assemblage sont dimensionnés pour autoriser, en configuration ouverte, un emboitement élastique lors dudit positionnement et/ou dudit retrait.

De préférence, les éléments de conduit sont choisis parmi :
- les éléments de conduit dont les extrémités sont munies des formes d'emboîtement mâle/femelle, ou
- les éléments de conduit dont les extrémités sont dépourvues des formes d'emboîtement mâle/femelle.

Pour des éléments de conduit sans « formes d'emboîtement », la présente invention offre un centrage des éléments de conduit au sein de la partie berceau du collier d'assemblage, avant leur association par serrage.

Encore pour ces éléments de conduit sans « formes d'emboîtement », un avantage du collier d'assemblage selon l'invention est de pouvoir retirer un élément de conduit après montage, sans avoir à décaler les autres éléments de conduit déjà en place.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue générale et en perspective d'une partie d'un réseau de conduits, comprenant deux éléments de conduit dont les extrémités sont associées par l'intermédiaire d'un collier d'assemblage selon l'invention ;
[Fig. 2] est une vue schématique qui illustre deux formes de réalisation pour les éléments de conduit, dont les extrémités sont dépourvues de formes d'emboîtement mâle/femelle (partie A. de la figure 2) et dont les extrémités sont munies des formes d'emboîtement mâle/femelle (partie B. de la figure 2) ;
[Fig. 3] est une vue en perspective et isolée d'un collier d'assemblage selon l'invention, dans sa configuration ouverte ;
[Fig. 4] est une vue de côté et isolée d'un collier d'assemblage selon l'invention, dans sa configuration ouverte ;
[Fig. 5] est une vue en perspective et isolée d'un collier d'assemblage selon l'invention, dans sa configuration fermée ;
[Fig. 6] est une vue schématique, en coupe transversale et partielle, illustrant un collier d'assemblage comportant des premiers moyens d'assemblage annulaire en forme de nervures, qui sont adaptés à coopérer par un emboîtement annulaire avec les seconds moyens d'assemblage annulaire, complémentaires, qui sont ménagés au niveau des extrémités des éléments de conduit ;
[Fig. 7] est une vue schématique, en coupe transversale et partielle, illustrant un collier d'assemblage comportant des premiers moyens d'assemblage annulaire en forme de rainures, qui sont adaptés à coopérer par un emboîtement annulaire avec les seconds moyens d'assemblage annulaire, complémentaires, qui sont ménagés au niveau des extrémités des éléments de conduit ;
[Fig. 8] correspond à la vue générale et en perspective de la partie de réseau de conduits selon la figure 1, dans laquelle les colliers d'assemblage sont en configuration ouverte et les éléments de conduit sont extraits de ces colliers d'assemblage ;
[Fig. 9] correspond à la vue générale et en perspective de la partie de réseau de conduits selon la figure 1, dans laquelle les colliers d'assemblage sont en configuration ouverte et les éléments de conduit sont maintenant positionnés dans les colliers d'assemblage avec un maintien temporaire.

Il est à noter que, sur ces figures, les éléments structurels et/ou fonctionnels communs aux différentes variantes peuvent présenter les mêmes références.

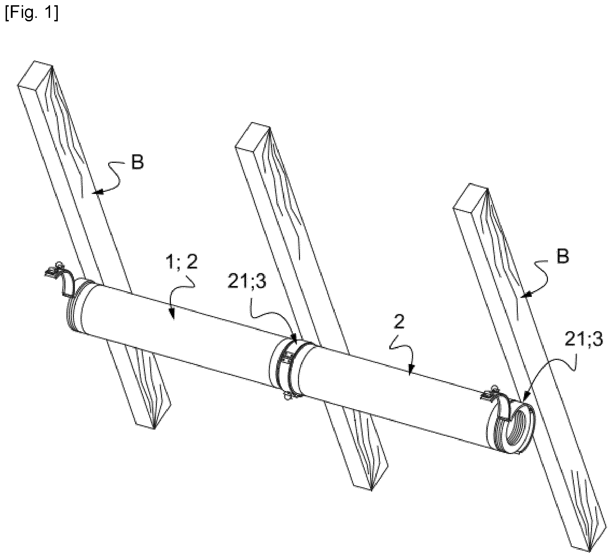

Un réseau de conduit 1, selon l'invention, est ainsi représenté schématiquement sur la figure 1.

Un tel réseau de conduit 1 comprend de manière générale :
- plusieurs éléments de conduit 2 dont les extrémités 21 sont destinées à être mises bout à bout, et
- des colliers d'assemblage 3, pour le positionnement et le maintien des extrémités 21 de deux éléments de conduit 2 dont les extrémités 21 sont mises bout à bout.

Tel que développé en relation avec les figures, les colliers d'assemblage 3 selon l'invention sont destinés à venir au niveau de l'interface des extrémités 21 mises bout à bout de deux éléments de conduit 2.

Les colliers d'assemblage 3 selon l'invention permettent avantageusement le montage / démontage des éléments de conduit 2, avec un maintien temporaire, avant et après l'opération de fermeture des colliers d'assemblage 3.

Tel que détaillé par la suite, chaque collier d'assemblage 3 selon l'invention comporte en particulier des premiers moyens d'assemblage annulaire 311 qui sont destinés à coopérer, par emboîtement annulaire, avec des seconds moyens d'assemblage annulaire 211 ménagés au niveau des extrémités 21 mises bout à bout de deux éléments de conduit 2.

### Eléments de conduits

Selon l'invention, par « élément de conduit », on englobe avantageusement les éléments de conduit 2 pour le transport des gaz, de préférence encore :
- les éléments de conduit 2 pour le transport d'air, ou
- les éléments de conduit 2 pour le transport des fumées.

Par « éléments de conduit 2 pour le transport d'air », on entend avantageusement un élément de conduit pour la réalisation d'un réseau de transport d'air dans une installation de gestion et de distribution d'air d'un bâtiment.

De préférence encore, les éléments de conduit 2 sont destinés à être assemblés avec d'autres éléments de conduit 2 identiques ou similaires pour réaliser un réseau de transport d'air, en particulier un réseau de VMC à simple ou à double flux dans une installation de gestion et de distribution d'air d'un bâtiment.

Par « éléments de conduit 2 pour le transport des fumées », on entend en particulier les éléments de conduit 2 destinés à s'étendre au sein d'une gaine technique entre un appareil de chauffage étanche de type poêle ou chaudière, et une sortie extérieure, par exemple constituée par un terminal de toiture.

De manière générale, les éléments de conduit 2 consistent avantageusement en des éléments de conduit 2 qui sont isolés thermiquement.

Par exemple, l'élément de conduit 2, isolé thermiquement, comprend un tube intérieur 25 rigide et un tube extérieur 26 rigide. Les deux tubes 25 et 26 ont ici une section circulaire.

Le tube extérieur 26 est concentrique au tube intérieur 25, maintenu séparé de ce dernier par des systèmes d'entretoises annulaires (non représentés et classiques en soi).

Ces deux tubes intérieur 25 et extérieur 26 peuvent être de nature diverse en fonction des applications envisagées : métal, plastique, composite, carton, papier technique, tissu fibré, mousse rigide, etc.

La longueur d'un élément de conduit 2 est par exemple de 1 m à 5 m.

Les éléments de conduit 2 sont de préférence des éléments de conduit 2 rigides.

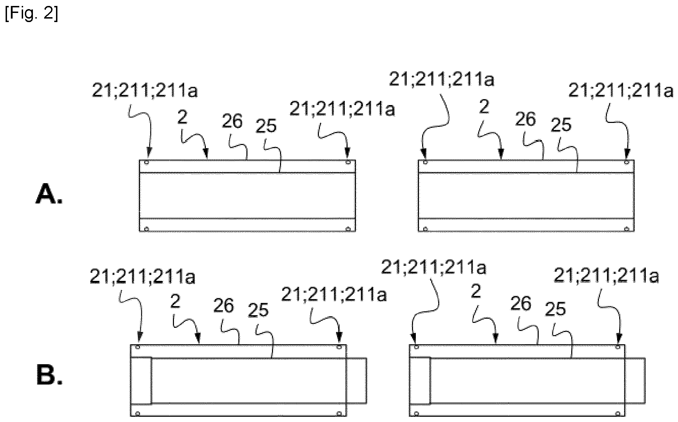

De préférence, les éléments de conduit 2 sont choisis parmi :
- les éléments de conduit 2 dont les extrémités 21 sont dépourvues de formes d'emboîtement mâle/femelle (partie A. de la figure 2), ou
- les éléments de conduit 2 dont les extrémités 21 sont munies des formes d'emboîtement mâle/femelle (partie B. de la figure 2).

Dans la forme « dépourvues de formes d'emboîtement mâle/femelle », les extrémités 21 sont avantageusement droites, perpendiculaires à l'axe central de l'élément de conduit 2.

Dans la forme « munies des formes d'emboîtement mâle/femelle », les extrémités 21 comportent avantageusement une première extrémité 21 mâle et une seconde extrémité 21 femelle.

Cette première extrémité 21 mâle et cette seconde extrémité 21 femelle sont par exemple obtenues par une section particulière du tube intérieur 25.

De manière générale, les extrémités 21 de ces éléments de conduit 2 comportent avantageusement les seconds moyens d'assemblage annulaire 211 (visibles en particulier sur les figures 2, 6 et 7).

Les seconds moyens d'assemblage annulaire 211 sont destinés à coopérer, par emboîtement annulaire, avec les premiers moyens d'assemblage annulaire 311 équipant le collier d'assemblage 3.

A cet égard, de préférence, les seconds moyens d'assemblage annulaire 211 comprennent au moins une seconde structure annulaire 211a qui est adaptée à coopérer, par emboîtement annulaire, avec les premiers moyens d'assemblage annulaire 311 équipant les colliers d'assemblage 3 selon l'invention.

De préférence, ladite au moins une seconde structure annulaire 211a est continue, ou discontinue, sur la circonférence de l'extrémité 21 de l'élément de conduit 2.

Le cas échéant, ladite au moins une seconde structure annulaire 211a est avantageusement ménagée au niveau du tube extérieur 26.

Chaque élément de conduit 2 comporte avantageusement deux secondes structures annulaires 211a, ménagées chacune au niveau de l'une de ses deux extrémités 21.

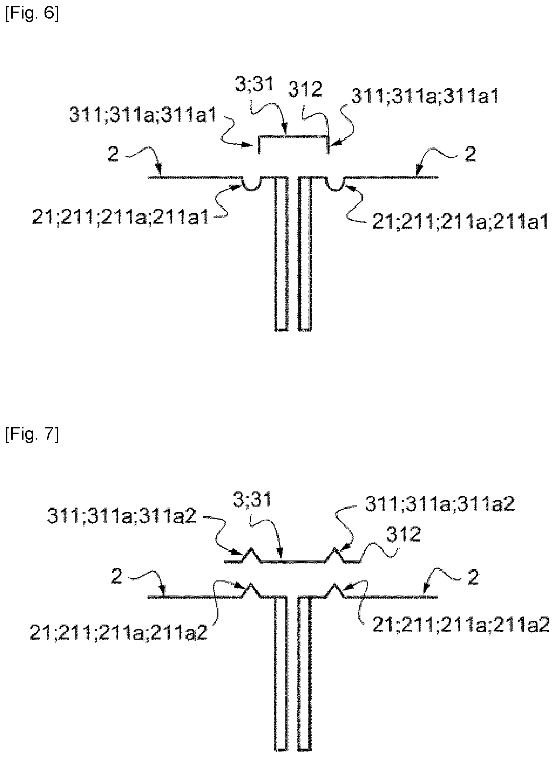

En particulier, la seconde structure annulaire 211a est de préférence choisie parmi :
- une rainure 211a1 (figure 6), par exemple une moulure concave ou gorge concave, destinée à recevoir, par emboîtement annulaire, une première structure annulaire 311a1, complémentaire et convexe, équipant le collier d'assemblage 3, et
- une nervure 211a2 (figure 7 notamment), par exemple une moulure convexe ou une collerette, s'étendant en saillie par rapport à l'élément de conduit 2, pour coopérer par emboîtement annulaire avec au moins une première structure annulaire 311a1, complémentaire et concave, équipant le collier d'assemblage 3.

La seconde structure annulaire 211a présente avantageusement une section courbe ou une section en V.

### Collier d'assemblage

Le collier d'assemblage 3 est conçu pour coopérer avec les extrémités 21 mises bout à bout de deux éléments de conduit 2.

Ce collier d'assemblage 3 forme ainsi avantageusement une interface entre les extrémités 21 mises bout à bout de deux éléments de conduit 2.

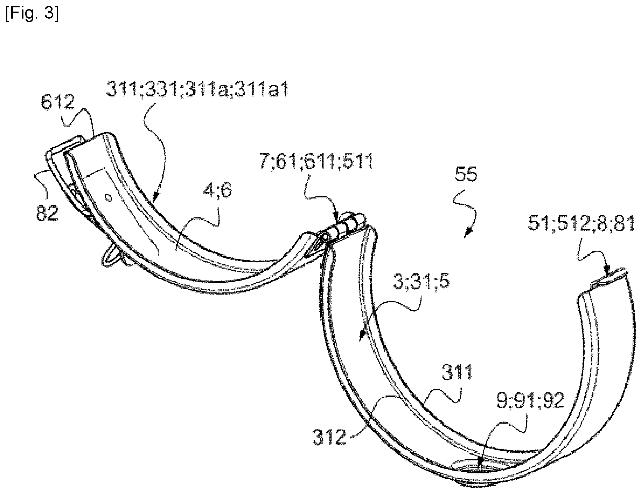

Tel que représenté sur les figures 3 à 6, le collier d'assemblage 3 comporte une face intérieure 31 qui est adaptée à coopérer avec ces extrémités 21 mises bout à bout deux éléments de conduit 2.

En d'autres termes, le collier d'assemblage 3 forme avantageusement un manchon, ou une interface, au sein duquel sont rapportées les extrémités 21 mises bout à bout de deux éléments de conduit 2.

Encore en d'autres termes, la face intérieure 31 du collier d'assemblage 3 est avantageusement destinée à envelopper les extrémités 21 mises bout à bout de deux éléments de conduit 2 (et en particulier à envelopper les tubes extérieurs 26).

Cette face intérieure 31 comporte de préférence deux bordures latérales 312.

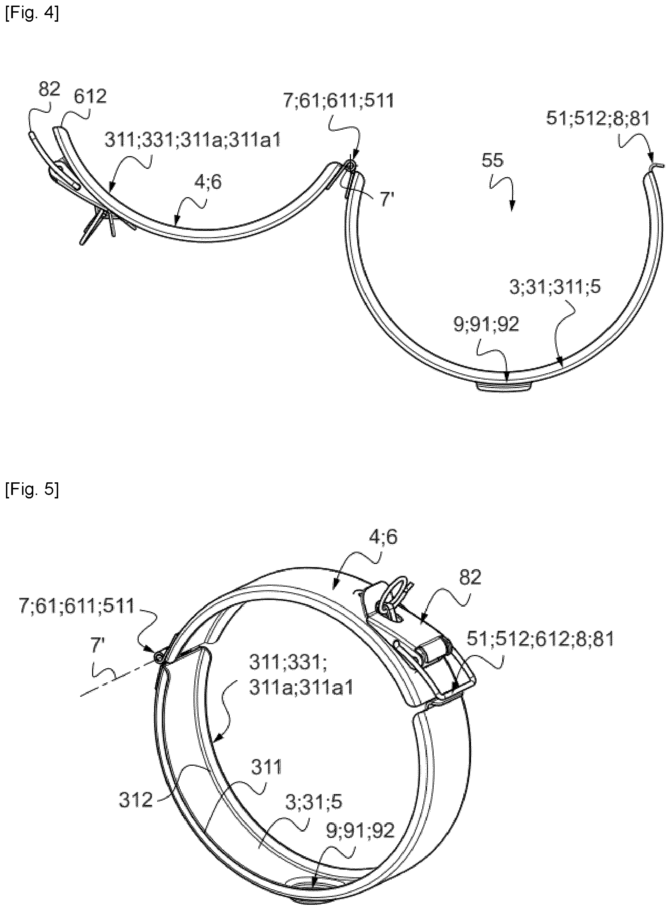

De manière générale, le collier d'assemblage 3 comporte encore des moyens de fermeture 4, autorisant la manoeuvre de ce collier d'assemblage 3 entre deux configurations :
- une configuration ouverte (figures 3 et 4), pour le positionnement et le retrait des extrémités 21 des deux éléments de conduit 2, et
- une configuration fermée (figure 5), pour le maintien des extrémités 21 mises bout à bout des deux éléments de conduit 2.

Encore de manière générale, le collier d'assemblage 3 est avantageusement réalisé en au moins une partie (ou au moins une pièce) qui est réalisée en matériau métallique ou en matériau plastique.

Selon l'invention, le collier d'assemblage 3 comprend encore au moins une partie berceau 5, s'étendant sur un secteur angulaire supérieur ou égal à 180°.

De préférence encore, la partie berceau 5 s'étend sur un secteur angulaire allant de 180° à 270°.

La partie berceau 5 consiste avantageusement en une pièce cintrée, formant un tronçon de la circonférence du collier d'assemblage 5, de préférence en arc de cercle.

Cette partie berceau 5 est par exemple réalisée dans un feuillard métallique.

En particulier, la partie berceau 5 comporte avantageusement deux extrémités 51 : une première extrémité 511 et une seconde extrémité 512.

Les extrémités 51 définissent avantageusement une ouverture radiale 55 lorsque le collier d'assemblage 3 est dans sa configuration ouverte.

Selon l'invention, la partie berceau 5 est apte à subir, en configuration ouverte, une déformation élastique radiale.

En d'autres termes, la partie berceau 5 est apte à subir une déformation élastique depuis :
- un premier diamètre, au repos,
- jusqu'à un second diamètre, supérieur, notamment lors du positionnement et du retrait des extrémités 21 mises bout à bout de deux éléments de conduit 2.

Par « déformation élastique radiale », on entend encore avantageusement un jeu élastique en écartement au niveau de l'ouverture radiale 55, lors du positionnement et du retrait des extrémités 21 mises bout à bout de deux éléments de conduit 2 au travers de cette ouverture radiale 55.

Une telle partie berceau 5 autorise ainsi un emboitement élastique des deux éléments de conduit 2 lors de leur positionnement et/ou de leur retrait, assurant un positionnement avec maintien temporaire des deux éléments de conduit 2 au sein de la partie berceau 5.

De manière avantageuse et préférentielle, le diamètre de la partie berceau 5 est identique au diamètre de l'extrémité 21 d'un élément de conduit 2. Et la cote de l'ouverture radiale 55 est inférieure au diamètre de l'extrémité 21 d'un élément de conduit 2.

Par ailleurs, la face intérieure 31 du collier d'assemblage 3 comporte les premiers moyens d'assemblage annulaire 311 qui sont adaptés à coopérer par un emboîtement annulaire avec les seconds moyens d'assemblage annulaire 211, complémentaires, qui sont ménagés au niveau des extrémités 21 de deux éléments de conduit 2 mis bout à bout.

De préférence, les premiers moyens d'assemblage annulaire 311 comprennent au moins une première structure annulaire 311a qui est adaptée à coopérer par emboîtement annulaire avec au moins une seconde structure annulaire 211a, complémentaire, constitutive des seconds moyens d'assemblage annulaire 211.

De préférence, ladite au moins une première structure annulaire 311a est continue, ou discontinue, sur la circonférence du collier d'assemblage 3.

En particulier, la première structure annulaire 311a est choisie parmi :
- une nervure 311a1 (figure 6 notamment), s'étendant en saillie par rapport à la face intérieure 31, pour coopérer par emboîtement annulaire avec au moins une seconde structure annulaire 211a1, complémentaire et concave, et
- une rainure 311a2 (figure 7), concave au niveau de la face intérieure 31, pour coopérer par emboîtement annulaire avec au moins une seconde structure annulaire 211a2, complémentaire et convexe.

Dans la forme de réalisation « nervure », les premiers moyens d'assemblage annulaire 311 comprennent de préférence deux nervures 311a1 en forme de collerette qui sont raccordées à chacune des bordures latérales 312 et qui sont orientées du côté de cette face intérieure 31.

Dans la forme de réalisation « rainure », la face intérieure 31 comporte de préférence deux rainures 311a2, ménagées chacune à proximité d'une bordure latérale 312.

De manière générale, les moyens de fermeture 4 comprennent avantageusement au moins une partie coiffe 6, mobile par rapport à la partie berceau 5.

Cette partie coiffe 6 est avantageusement constituée par une pièce cintrée, formant un tronçon de la circonférence du collier d'assemblage 3, de préférence en arc de cercle.

Cette partie coiffe 6 est avantageusement complémentaire de la partie berceau 5, pour former ensemble la circonférence du collier d'assemblage 3.

Cette partie coiffe 6 est par exemple réalisée dans un feuillard métallique ou dans un fil métallique rigide.

Cette partie coiffe 6 est mobile, par rapport à la partie berceau 5, entre :
- la configuration ouverte (figures 3 et 4), dans laquelle la partie berceau 5 définit une ouverture radiale 55 autorisant un emboitement élastique des deux éléments de conduit 2 lors du positionnement et/ou du retrait, et
- la configuration fermée (figure 5), dans laquelle ladite au moins une partie coiffe 6 obture l'ouverture radiale 55 de la partie berceau 5.

Pour autoriser cette manoeuvre, lesdites au moins deux parties berceau 5 et coiffe 6 coopèrent par l'intermédiaire de moyens charnières 7, définissant avantageusement un axe de rotation 7'.

L'axe de rotation 7' est de préférence parallèle à l'axe traversant du collier d'assemblage 3.

Les moyens charnière 7 consistent ici en une charnière rapportée.

Selon un mode de réalisation particulier, le collier d'assemblage 3 comprend deux pièces : la partie berceau 5, unique, et la partie coiffe 6, unique, coopérant par l'intermédiaire des moyens charnières 7.

De manière alternative, non représentée, les moyens charnière 7 peuvent consister en une charnière intégrée, dit autrement encore charnière monobloc. Une telle charnière intégrée peut être réalisée avec au moins une pièce rapportée ou sans pièce rapportée, avec par exemple une ligne de pliage réalisée dans la matière du collier d'assemblage 3.

De préférence encore, la partie coiffe 6 comporte deux extrémités 61 :
- une première extrémité 611 coopérant avec une première extrémité 511 de la partie berceau 5, par l'intermédiaire des moyens charnières 7, et
- une seconde extrémité 612 coopérant, en configuration fermée, avec une seconde extrémité 512 de la partie berceau 5 par l'intermédiaire de moyens de verrouillage 8.

Par exemple, les moyens de verrouillage 8 comprennent :
- un crochet 81, ménagé ici au niveau de la seconde extrémité 512 de la partie berceau 5, et
- un module de fermeture métallique à étrier 82, ou une boucle de serrage, ménagée ici au niveau de la seconde extrémité 612 de la partie coiffe 6 et destiné à coopérer avec le crochet 81 de la partie berceau 5.

De manière générale, le collier d'assemblage 3 comporte encore avantageusement des moyens de montage 9 adaptés à recevoir un organe support (non représenté et classique en soi) destiné à être installé entre le collier d'assemblage 3 et un bâti B, par exemple sur les fermettes.

Les moyens de montage 9 consistent par exemple un orifice oblong 91 qui est ménagé sur une zone emboutie 92, à l'opposé de la face intérieure 31.

L'orifice oblong 91 autorise un jeu en positionnement du collier d'assemblage 3, utile pour assurer un alignement par rapport aux colliers d'assemblage 3 successifs.

La zone emboutie 92 est quant à elle intéressante pour recevoir une tête de l'organe support, sans interférence avec les extrémités 21 mises bout à bout de deux éléments de conduit 2.

### Réseau de conduits et mise en oeuvre

Un réseau de conduits 1, selon l'invention, comprend ainsi :
- plusieurs éléments de conduit 2 dont les extrémités 21 sont mises bout à bout, et
- des colliers d'assemblage 3, selon l'invention, pour le positionnement et le maintien des extrémités 21 de deux éléments de conduit 2.

En pratique, ladite au moins une partie berceau 5 des colliers d'assemblage 3 est avantageusement dimensionnée pour autoriser, en configuration ouverte, un emboitement élastique lors du positionnement et/ou du retrait des extrémités 21 des éléments de conduit 2.

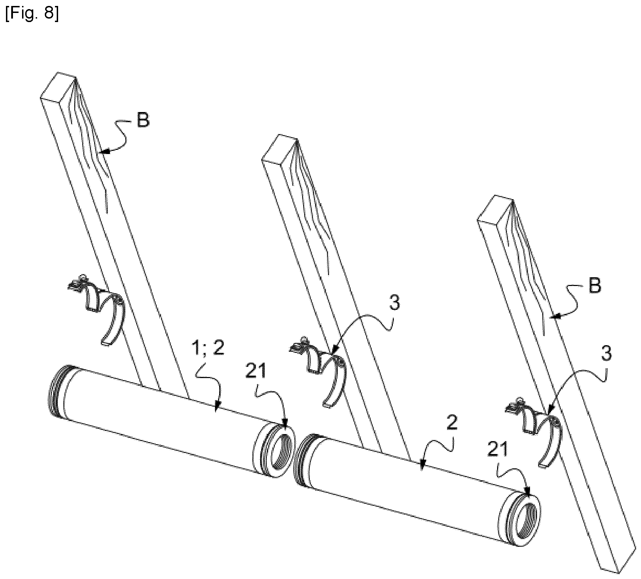

Et de manière générale, en pratique, la pose du réseau de conduits 1 commence par la fixation des colliers d'assemblage 3 sur le bâti B (figure 8).

Si nécessaire, ces colliers d'assemblage 3 sont manoeuvrés en configuration ouverte, de sorte à libérer ici leur ouverture radiale 55.

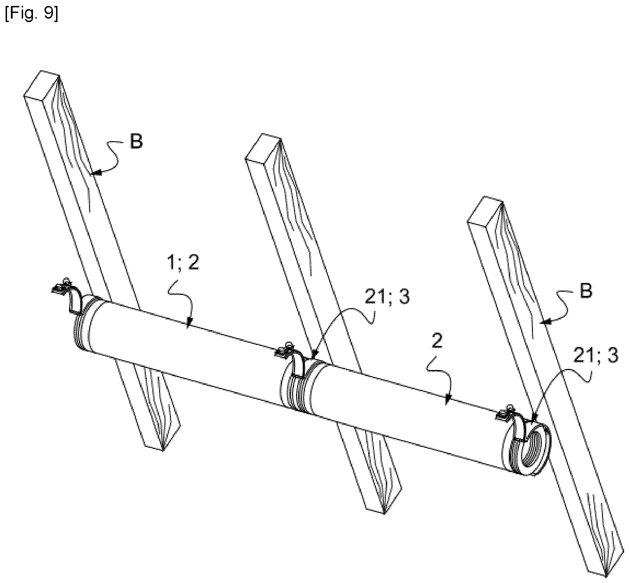

Les éléments de conduit 2 sont ensuite manipulés de sorte à introduire leurs extrémités 21 au sein des parties berceaux 5, avantageusement par déformation élastique au travers des ouvertures radiales 55 (figure 9).

En d'autres termes, chaque élément de conduit 2 est manipulé de sorte à introduire ses deux extrémités 21 au sein de deux colliers d'assemblage 3 successifs.

Ce montage assure alors un positionnement, avec maintien temporaire, des éléments de conduit 2 au sein des parties berceaux 5.

Pour des éléments de conduit 2 sans « formes d'emboîtement mâle/femelle », la présente invention offre un centrage des éléments de conduit 2 au sein de la partie berceau 5 du collier d'assemblage 3, avant même la manoeuvre en configuration fermée.

Les colliers d'assemblage 3 peuvent ensuite être manoeuvrés en configuration fermée par le poseur (figure 1).

Les premiers moyens d'assemblage annulaire 311 coopèrent ainsi, par emboîtement annulaire, avec les seconds moyens d'assemblage annulaire 211 pour compléter la solidarisation entre chaque collier d'assemblage 3 et les extrémités 21 de deux éléments de conduit 2.

En l'espèce, la distance séparant les premières structures annulaires 311a correspond ici à la distance séparant les secondes structures annulaires 211a.

Cette collaboration entre les premiers moyens d'assemblage annulaire 311 et les seconds moyens d'assemblage annulaire 211 contribue au serrage des extrémités 21 de deux éléments de conduit 2.

Les formes complémentaires des premiers moyens d'assemblage annulaire 311 et des seconds moyens d'assemblage annulaire 211 sont adaptées pour obtenir une telle compression des extrémités 21 des éléments de conduit 2 lors de la fermeture du collier d'assemblage 3.

Lorsque des éléments de conduit 2 doivent être retirés, par exemple lors d'une maintenance, il suffit :
- de manoeuvrer certains au moins des colliers d'assemblage 3 en configuration ouverte, puis
- de manipuler l'un au moins des éléments de conduit 2 de sorte à l'extraire des colliers d'assemblage 3 associés.

Là encore, cette extraction est facilitée par l'assemblage par déformation élastique entre la partie berceau 5 et les extrémités 21 des éléments de conduit 2.

En outre, les éléments de conduit 2 amont/aval sont avantageusement maintenus temporairement au sein des colliers d'assemblage 3, par l'assemblage par déformation élastique en combinaison avec la coopération des moyens d'assemblage 211, 311.

Bien entendu, diverses autres modifications peuvent être apportées à l'invention dans le cadre des revendications annexées.

## Revendications

1. Collier d'assemblage, pour le positionnement et le maintien des extrémités (21) de deux éléments de conduit (2) qui sont mises bout à bout, par exemple des éléments de conduit (2) pour le transport des gaz, avantageusement d'air ou des fumées,
lequel collier d'assemblage (3) comporte une face intérieure (31) adaptée à coopérer avec les extrémités (21) mises bout à bout desdits deux éléments de conduit (2),
lequel collier d'assemblage (3) comporte des moyens de fermeture (4), autorisant la manoeuvre dudit collier d'assemblage (3) entre deux configurations :
- une configuration ouverte, pour le positionnement et le retrait des extrémités (21) desdits deux éléments de conduit (2), et
- une configuration fermée, pour le maintien des extrémités (21) mises bout à bout desdits deux éléments de conduit (2),
**caractérisé en ce que** ledit collier d'assemblage (3) comprend au moins une partie berceau (5), s'étendant sur un secteur angulaire supérieur ou égal à 180°,
laquelle partie berceau (5) est apte à subir, en configuration ouverte, une déformation élastique radiale pour autoriser un emboitement élastique desdits deux éléments de conduit (2) lors dudit positionnement et/ou dudit retrait, assurant un positionnement avec maintien temporaire desdits deux éléments de conduit (2),
et **en ce que** ladite face intérieure (31) du collier d'assemblage (3) comporte des premiers moyens d'assemblage annulaire (311) qui sont adaptés à coopérer par un emboîtement annulaire avec des seconds moyens d'assemblage annulaire (211), complémentaires, qui sont ménagés au niveau des extrémités (21) desdits éléments de conduit (2).

2. Collier d'assemblage, selon la revendication 1, **caractérisé en ce que** les premiers moyens d'assemblage annulaire (311) comprennent au moins une première structure annulaire (311a) qui est choisie parmi une nervure (311a1) et une rainure (311a2), adaptée à coopérer par emboîtement annulaire avec au moins une seconde structure annulaire (211a), complémentaire, constitutive desdits seconds moyens d'assemblage annulaire (211).

3. Collier d'assemblage, selon la revendication 2, **caractérisé en ce que** ladite au moins une première structure annulaire (311a) consiste en une nervure (311a1) qui s'étend en saillie par rapport à ladite face intérieure (31), pour coopérer par emboîtement annulaire avec ladite au moins une seconde structure annulaire (211a), complémentaire et concave.

4. Collier d'assemblage, selon la revendication 3, **caractérisé en ce que** la face intérieure (31) comporte deux bordures latérales (312) et **en ce que** les premiers moyens d'assemblage annulaire (311) comprennent deux nervures (311a1) en forme de collerette qui sont raccordées à chacune desdites bordures latérales (312) et qui sont orientées du côté de ladite face intérieure (31).

5. Collier d'assemblage, selon la revendication 2, **caractérisé en ce que** ladite au moins une première structure annulaire (311a) consiste en une rainure (311a2) qui est concave par rapport à ladite face intérieure (31), pour coopérer par emboîtement annulaire avec une seconde structure annulaire (211a), complémentaire et convexe, constitutive desdits seconds moyens d'assemblage annulaire (211).

6. Collier d'assemblage, selon l'une quelconque des revendications 1 à 5, **caractérisé en ce que** lesdits moyens de fermeture (4) comprennent au moins une partie coiffe (6), mobile par rapport à ladite partie berceau (5) entre :
- la configuration ouverte, dans laquelle ladite partie berceau (5) définit une ouverture radiale (55) autorisant un emboitement élastique desdits deux éléments de conduit (2) lors dudit positionnement et/ou dudit retrait,
- la configuration fermée, dans laquelle ladite au moins une partie coiffe (6) obture ladite ouverture radiale (55) de la partie berceau (5).

7. Collier d'assemblage, selon la revendication 6, **caractérisé en ce que** lesdites au moins deux parties (5, 6) coopèrent par l'intermédiaire de moyens charnières (7).

8. Collier d'assemblage, selon la revendication 7, **caractérisé en ce que** ladite partie coiffe (6) comporte deux extrémités (21) :
- une première extrémité (611) coopérant avec une première extrémité (511) de ladite partie berceau (5), par l'intermédiaire desdits moyens charnières (7), et
- une seconde extrémité (612) coopérant, en configuration fermée, avec une seconde extrémité (512) de ladite partie berceau (5) par l'intermédiaire de moyens de verrouillage (8).

9. Collier d'assemblage, selon l'une quelconque des revendications 7 ou 8, **caractérisé en ce que** le collier d'assemblage (3) comprend une unique partie berceau (5) et une unique partie coiffe (6), coopérant par l'intermédiaire desdits moyens charnières (7).

10. Collier d'assemblage, selon l'une quelconque des revendications 1 à 9, **caractérisé en ce que** la partie berceau (5) s'étend sur un secteur angulaire allant de 180° à 270°.

11. Collier d'assemblage, selon l'une quelconque des revendications 1 à 10, **caractérisé en ce que** ledit collier d'assemblage (3) comporte des moyens de montage (9), par exemple un orifice oblong (91) sur une zone emboutie (92), adaptés à recevoir un organe support destiné à être installé entre ledit collier d'assemblage (3) et un bâti (B).

12. Réseau de conduits, comprenant :
- plusieurs éléments de conduit (2) dont les extrémités (21) sont mises bout à bout, lesquelles extrémités (21) comportent lesdits seconds moyens d'assemblage annulaire (211), et
- des colliers d'assemblage (3), selon l'une quelconque des revendications 1 à 11, pour le positionnement et le maintien des extrémités (21) de deux éléments de conduit (2),
et en ce que les extrémités (21) desdits éléments de conduit (2) et ladite au moins une partie berceau (5) des colliers d'assemblage (3) sont dimensionnés pour autoriser, en configuration ouverte, un emboitement élastique lors dudit positionnement et/ou dudit retrait.

13. Réseau de conduits, selon la revendication 12, **caractérisé en ce que** les éléments de conduit (2) sont choisis parmi :
- les éléments de conduit (2) dont les extrémités (21) sont munies des formes d'emboîtement mâle/femelle, ou
- les éléments de conduit (2) dont les extrémités (21) sont dépourvues des formes d'emboîtement mâle/femelle.
